# EUROPÄISCHE PATENTANMELDUNG

(11) **EP 2 311 929 A1**
(43) Veröffentlichungstag der Anmeldung: **20.04.2011**
(21) Anmeldenummer: 09014347.0
(22) Anmeldetag: 17.11.2009
(51) Int. Cl.: C11B 3/00, C11B 3/04, C11B 3/06, C11B 3/14, C11B 3/10, C11C 3/04

(54) **Verfahren zur Aufarbeitung von leicht verseifbarem Rohöl pflanzlicher oder tierischer Herkunft, für die Weiterverarbeitung zu Biodiesel**

(30) Priorität: 19.10.2009 DE 102009049950
(71) Anmelder: Lurgi GmbH, 60439 Frankfurt am Main (DE)
(72) Erfinder: Bönsch, Rudolf, Dr., 55299 Nackenheim (DE); Seidel, Eckhard, Dr., 60388 Frankfurt (DE); Saft, Helmut, 61194 Niddatal (DE)

(57) **Zusammenfassung**

Verfahren zur Aufarbeitung von leicht verseifbarem Rohöl pflanzlicher oder tierischer Herkunft, insbesondere Jatrophaöl, das als Rohstoff zur Herstellung von Biodiesel mittels eines Umesterungsverfahrens geeignet ist, bei dem eine Entschleimung des Rohöls unter Zugabe von Säure, anschließend eine Teilneutralisation unter Zugabe von Base und eine Abtrennung der dabei entstandenen Schleimstoffe und Seifen mittels eines mechanischen Trennverfahrens durchgeführt wird, und daran anschließend durch Strippen und/oder unter Anlegen eines Vakuums der Gehalt an Geruchsstoffen und freien Fettsäuren im Öl weiter reduziert wird, wobei die Entschleimung, die Neutralisation mit Base und die Abtrennung der Schleimstoffe in einem ersten Temperaturbereich durchgeführt werden und das Strippen und/oder die Vakuumbehandlung in einem zweiten Temperaturbereich durchgeführt werden, wobei der Abstand zwischen der oberen Grenze des ersten und der unteren Grenze des zweiten Temperaturbereichs mindestens 100, aber höchstens 220 K, beträgt.

## Beschreibung

Die Erfindung betrifft ein Verfahren zur Aufarbeitung von leicht verseifbarem Rohöl pflanzlicher oder tierischer Herkunft, das als Rohstoff zur Herstellung von Biodiesel mittels eines Umesterungsverfahrens geeignet ist, bei dem, in einer ersten Verfahrensstufe, eine Entschleimung des Rohöls unter Zugabe von Säure, anschließend eine Teilneutralisafion der zugegebenen Säure unter Zugabe von Base und eine Abtrennung der dabei entstandenen Schleimstoffe und Seifen mittels eines mechanischen Trennverfahrens durchgeführt wird, und bei dem dann, in einer weiteren Verfahrensstufe, durch Strippen mit inertem Gas oder Wasserdampf und/oder unter Anlegen eines Vakuums der Gehalt an Geruchsstoffen und freien Fettsäuren im Öl weiter reduziert wird.

Parallel zu der in der letzten Jahren verstärkten Nutzung von Ölen pflanzlicher Herkunft für die Erzeugung von Kraftstoff, ist die Problematik ins öffentliche Bewusstsein gerückt, dass die dabei verwendeten Öle in der Regel auch als Speiseöle verwendet werden und dass somit diese Art der Kraftstofferzeugung in einer ethisch bedenklichen Konkurrenz zur Nahrungsmittelerzeugung steht. Auf der Suche nach einem Ausweg aus diesem Dilemma ist man auf die Jatrophapflanze als Öllieferant aufmerksam geworden, denn diese Pflanze wächst auf schlechtesten Böden, die normalerweise für Plantagen nicht geeignet sind, und ihr Öl kommt wegen seiner Giftigkeit zur Speiseölherstellung nicht in Frage. Somit ist eine Konkurrenzsituation zur Speiseölproduktion nicht gegeben. Pflanzliche und tierische Fette oder Öle enthalten viele verschiedene Verunreinigungen, wie Phosphatide, Schleimstoffe und andere komplexe kolloidale Verbindungen, freie Fettsäuren, Zuckerderivate und Polymere, die vor der Verwendung, bzw. Weiterverarbeitung des Öls, z. B. zu Biodiesel, entfernt werden müssen. Die zur Entfernung dieser Verunreinigungen bekannten Verfahren sind beispielsweise beschrieben in Ullmann's Encyclopedia of Industrial Chemistry, Sixth Edition, 1998 Electronic Release, FATS AND FATTY OILS - Refining.

Die Reinigung des Öls beginnt damit, die hydratisierbaren Phosphatide zu entfernen, indem man, bei Temperaturen zwischen 70 und 80ºC, 2-5 % Wasser in das Öl einrührt, wobei die hydratisierbaren Phosphatide das Wasser absorbieren und dabei einen Schleim bilden, der durch Zentrifugieren aus dem Öl abgetrennt werden kann. Anschließend werden die nicht hydratisierbaren Phosphatide durch Zugabe von Zitronensäure und/oder Phosphorsäure, ebenfalls bei 70 bis 80ºC (DE 26 09 705 C3), in hyd ratisierbare Phosphatide umgewandelt. Nach der Zugabe der Säuren wird Natronlauge, bei Temperaturen zwischen 40 und 80ºC, zugegeben, um die Säuren zu neutralisieren und die von den Säuren aus den Phosphatiden heraus gelösten Metallionen zu binden. Gleichzeitig werden im Öl vorhandene freie Fettsäuren und, zum normalerweise kleinen Teil, auch die Triglyceride des Öls verseift. Zur besseren Abtrennung des gebildeten Schleims und des Seifenstocks, mittels Zentrifugieren, wird die Mischung auf 60 bis 90ºC erhitzt.

Zur Entfernung von Pigmenten und Resten von Phosphatiden, Seifen und anderen Verunreinigungen werden dem Öl anschließend Adsorptionsstoffe, z.B. Bleicherden, hinzugefügt. Diese sogenannte Bleichung wird bei ca. 100ºC durchgeführt.

Als letzter Schritt der Reinigung werden Geruchsstoffe und Reste an freien Fettsäuren aus dem Öl entfernt. Diese werden mittels Wasserdampf und unter Vakuum aus dem Öl gestrippt. Dabei kommen Temperaturen von 190 bis 270ºC zur Anwendung.

Nachteilig an diesem in der Fachwelt etablierten Verfahren ist, dass es bei der Anwendung auf leicht verseifbare, oxidativ instabile Öle, wie Jatropha-, Maiskeim- oder Algenöl zu hohen Verlusten an Öl durch Verseifung kommt.

In EP 1 892 232 A1 wird von der Anwendung eines Verfahrens, das dem oben beschrieben ähnlich ist, auf Jatrophaöl, berichtet. Dabei wird das Öl am Beginn des Reinigungsprozesses auf 75ºC erhitzt. Das Einrü hren von Zitronensäure und Natronlauge erfolgt mittels eines Ultra turrax-Mischers. Zur Abtrennung der Schleimstoffe durch Zentrifugieren wird das Öl auf 70ºC erhitzt. Im Unterschied zur etablierten Verfahrensweise wurde dabei aber auf die Verwendung von Phosphorsäure, und damit auf ein bewährtes Mittel zur Entfernung nicht hydratisierbarer Phosphatide, verzichtet. Über die Höhe der Ölausbeute wird in dieser Schrift nichts erwähnt.

In EP 0 269 277 B1 wird ein Reinigungsverfahren beschrieben, bei dem zunächst eine organische Säure oder ein Säureanhydrid und anschließend Wasser im Öl dispergiert wird, der Schleim abgetrennt wird und dann mittels Bleicherde das Öl entfärbt wird. Bei dieser Erfindung soll während des Entschleimens eine Temperatur von 40ºC nicht überschritten werden und es wird keine Laugenneutralisation ausgeführt. Das auf diese Weise entschleimte Öl soll in bekannter Weise gebleicht, deodoriert und durch Strippen von freien Fettsäuren befreit werden. Bei diesem Verfahren wird auf die seit langem bewährte Verwendung von Natronlauge verzichtet, sodass die Entfernung der freien Fettsäure hauptsächlich durch Strippen mit Wasserdampf bei hohen Temperatur erfolgen muss, in den Beispielen werden dafür Temperaturen von 225 bis 260ºC angegeben. Diese Temperaturen stellen für oxidativ empfindliche Öle, wie Jatrophaöl, eine hohe Belastung dar.

In DE 691 27 127 T2 wird ein Reinigungsverfahren beschrieben, bei dem zunächst eine Säure oder ein Säureanhydrid im Öl dispergiert und anschließend eine Hydratationsbehandlung des Öls durch Einmischen von Alkali durchgeführt wird. Die Hydratationstemperatur soll dabei unter 50ºC, möglichst zwischen 20 und 30ºC liegen. Während der Säurebehandlung soll die Temperatur möglichst hoch, vorzugsweise zwischen 70 und 90ºC liegen. Zur Verwendung von Alkali wird nur eine ungefähre Angabe gemacht, die besagt, dass soviel Alkali zuzugeben ist, dass zwischen 10 und 200 % der zugefügten Säure neutralisiert werden. Auf die der Entschleimung nachfolgenden Verfahren, Bleichen, Deodorieren und Strippen, wird in dieser Schrift nicht eingegangen.

In WO 2006/043281 wird ein Reinigungsverfahren beschrieben, dass speziell für Jatrophaöl geeignet sein soll. Bei diesem Verfahren wird auf die Einmischung von Säure oder Säureanhydrid in das Öl verzichtet. Statt dessen wird, bei Raumtemperatur, Natronlauge in das Öl eingerührt und davon ausgegangen, dass Schleimstoffe und Verunreinigungen von den entstandenen Seifen gebunden werden und mit ihnen entfernt werden können. Im Anschluß daran wird lediglich noch ein Antioxidans dem Öl hinzu gefügt und mittels trockener Luft Feuchtigkeit aus dem Öl gestrippt. Damit ist das Öl bereit für den Einsatz im Umesterungsverfahren.

Als nachteilig ist anzusehen, dass durch den Verzicht auf die Zugabe der bewährten Entschleimungsmittel Phosphor- und Zitronensäure, der Natronlauge lediglich die freien Fettsäuren gegenüber stehen, und dass damit die Triglyceride verstärkt dem Angriff der Natronlauge zur Verseifung ausgesetzt sind.

Vor dem Hintergrund dieses Stands der Technik bestand daher die Aufgabe, ein Verfahren zur Aufarbeitung von Jatropha- und anderer, stark zu Verseifung neigender Öle zur Verfügung zu stellen, das unter Anwendung bewährter Verfahrensschritte und -mittel, leicht anwendbar ist und sowohl eine hohe Ausbeute, als auch eine für die Weiterverarbeitung zu Biodiesel ausreichende Produktqualität liefert.

Die Aufgabe wird erfindungsgemäß durch ein Verfahren mit den Merkmalen des Anspruchs 1 dadurch gelöst, das die Verfahrensstufen Entschleimung, Teilneutralisation mit Base und Abtrennung der Schleimstoffe in einem ersten Temperaturbereich durchgeführt werden und dass das Strippen und/oder die Vakuumbehandlung in einem zweiten Temperaturbereich durchgeführt wird, wobei der Abstand zwischen der oberen Grenze des ersten und der unteren Grenze des zweiten Temperaturbereichs mindestens 100, aber höchstens 220 K, beträgt.

Durch die Reduzierung der thermischen Belastung des Öls gegenüber den bekannten Reinigungsverfahren, ist es möglich auch das stark zur Verseifung neigende Jatrophaöl mit wirtschaftlicher Ausbeute und gutem Qualitätsergebnis zu reinigen. Auch weitere, leicht verseifbare Rohöle sind der Aufarbeitung nach dem erfindungsgemäßen Verfahren zugänglich.

Weiterbildungen, Vorteile und Anwendungsmöglichkeiten der Erfindung ergeben sich auch aus der nachfolgenden Beschreibung bevorzugter Ausgestaltungen. Dabei bilden alle beschriebenen Merkmale für sich oder in beliebiger Kombination den Gegenstand der Erfindung, unabhängig von ihrer Zusammenfassung in den Ansprüchen oder deren Rückbeziehung.

Eine besondere Ausgestaltung der Erfindung ist dadurch gekennzeichnet, dass der erste Temperaturbereich zwischen 0 und 50ºC, be vorzugt zwischen 15 und 35ºC liegt. Dieser Temperaturbereich entspricht in der Regel der Umgebungstemperatur, sodass normalerweise auf eine Beheizung der verwendeten Behältnisse verzichtet werden kann.

Eine weitere besondere Ausgestaltung der Erfindung ist dadurch gekennzeichnet, dass der zweite Temperaturbereich zwischen 170 und 220ºC, bevorzugt zwischen 190 und 210ºC, besonders bevorzu gt zwischen 195 und 205ºC liegt. Diese Temperaturen liegen unterhalb de r nach dem Stand der Technik verwendeten. Die thermische Belastung der Fette oder Öle wird dadurch verringert.

Eine weitere besondere Ausgestaltung der Erfindung ist dadurch gekennzeichnet, dass die zur Teilneutralisierung der zum Entschleimen verwendeten Säure NaOH als Base verwendet wird. Vorteilhaft dabei ist, dass in den Umesterungsverfahren, in denen das erfindungsgemäß aufgearbeitete Öl eingesetzt wird, häufig ebenfalls NaOH, als Katalysator, verwendet wird.

Für die Umwandlung nicht hydratisierbarer Phosphatide in einen leicht aus dem Fett oder Öl entfernbaren Schleim, hat sich die Verwendung von Phosphor- und/oder Zitronensäure bewährt. Darum besteht eine bevorzugte Ausgestaltung des erfindungsgemäßen Verfahrens darin, diese Säuren zur Entschleimung einzusetzen.

Eine weitere besondere Ausgestaltung der Erfindung ist dadurch gekennzeichnet, dass zur Abtrennung der durch die Behandlung mit Base und Säure entstandenen Schleimstoffe und Seifen als mechanisches Trennverfahren die Zentrifugation, die Filtration oder die Dekantation oder eine Kombination dieser Verfahren eingesetzt werden.

Eine weitere besondere Ausgestaltung der Erfindung ist dadurch gekennzeichnet, dass das Strippen bevorzugt mit Wasserdampf als Strippungsmittel durchgeführt wird, denn Wasserdampf ist für diese Verfahrensstufe seit langem bewährt, da er preisgünstig ist und das Fett oder Öl nicht chemisch angreift.

In einer bevorzugten Ausgestaltung der Erfindung in der Verfahrensstufe Entschleimung erfolgt die Zugabe von Phosphorsäure und entsalztem Wasser in der Weise, dass 0,2 bis 0,3 Gew.-%, bezogen auf das Startgewicht des Ansatzes, an 85%-iger Phosphorsäure in das Rohöl eingerührt wird. Durch die Phosphorsäure werden die nichthydratisierbaren Phosphatide in hydratisierbare umgewandelt.

Eine weitere bevorzugte Ausgestaltung der Erfindung ist dadurch gekennzeichnet, dass in der Verfahrensstufe Entschleimung zusätzlich zur Phosphorsäure 0,03 bis 0,05 Gew.-% , bezogen auf das Startgewicht des Ansatzes, kristalliner Zitronensäure, und/ oder Tocopherole und/ oder kristalline Ascorbinsäure und 0,05 bis 0,1 Gew.-%, bezogen auf das Startgewicht des Ansatzes, vorzugsweise entsalztes Wasser in das Rohöl eingerührt wird. Durch diese Kombination wird eine Emulsionsbildung beim Einrühren der Phosphorsäure vermindert. Außerdem dienen die Antioxidantien Zitronensäure, Tocopherol und/oder Ascorbinsäure als Inhibitoren einer Polymerisierung der Fettsäureketten der Triglyceride des Öls.

Eine weitere bevorzugte Ausgestaltung der Erfindung ist dadurch gekennzeichnet, dass vor der Entschleimung mit einer Säure eine Entschleimung mit Wasser und anschließender Abtrennung der Schleimstoffe mittels eines mechanischen Trennverfahrens durchgeführt wird. Diese Verfahrensstufe dient der Entfernung hydratisierbarer Phosphatide und der Entfernung von Feststoffen.

Eine weitere bevorzugte Ausgestaltung der Erfindung ist dadurch gekennzeichnet, dass in der Verfahrensstufe Teilneutralisation die Natronlauge in Form von 12-%-iger NaOH-Lösung zugesetzt wird, und das in einer solchen Menge, dass rechnerisch höchstens 70 mol-% der in der Verfahrensstufe Nachentschleimung zugesetzten Phosphorsäure gemäß der Reaktionsgleichung H₃P0₄ + 3 NaOH ≥ Na₃PO₄ + 3 H₂O neutralisiert wird, und dass 8 bis 10 Gew-%, bezogen auf das Startgewicht des Ansatzes, Wasser in die Mischung eingerührt wird. Durch die Natronlauge werden die im Öl enthaltenen freien Fettsäuren verseift, wobei durch die Zugabe der Lauge im Unterschuss eine zu starke Verseifung der Triglyceride des Öls verhindert wird.

Eine weitere bevorzugte Ausgestaltung der Erfindung ist dadurch gekennzeichnet, dass zur Abtrennung von Schleimstoffen und Seifen in Anschluss an die Nachentschleimung und die Teilneutralisation dem Rohöl Adsorptionsstoffe zugesetzt werden, um die Wirkung des mechanischen Trennverfahrens zu verbessern. Als Adsorptionsstoffe kommen beispielsweise Bleicherden, Holzmehl oder Cellulosefasern in Frage.

Eine weitere bevorzugte Ausgestaltung der Erfindung ist dadurch gekennzeichnet, dass die Verfahrensstufe Strippen als kontinuierliches Verfahren durchgeführt wird.

Besonders geeignet ist das erfindungsgemäße Verfahren zur Aufarbeitung von Jatrophaöl. Durch die niedrige thermische Belastung und die begrenzte Zugabe von Lauge bei dem erfindungsgemäßen Aufarbeitungsverfahren, wird die Verseifung weitgehend zurückgehalten und eine gute Ausbeute an gereinigtem Öl erzielt. Auch weil das erfindungsgemäße Verfahren nur einfache und bewährte Apparaturen erfordert, ist es für die Verarbeitung von Jatrophaöl besonders geeignet, das hauptsächlich in wenig entwickelten und industrialisierten Gegenden erzeugt werden soll.

Anhand der folgenden Beispiele wird die Erfindung erläutert:

### Beispiel 1 : Aufarbeitung von Jatropha-Rohöl nach dem Stand der Technik

### Analyse des Rohöls Jatropha curcas

| - Herkunftsland: | China |
|---|---|
| - Gesamtverschmutzung nach DIN EN 12662 | 23,8 g/kg |
| - Phosphorgehalt nach DIN EN 14107 | 1355 ppm |
| - Oxidationsstabilität 110ºC nach DIN EN 14112 | 17,9 h |
| - Erdalkaligehalt (Ca + Mg) nach DIN EN 14538 | 1776 ppm |
| - Säurezahl nach DIN EN 14104 | 3,41 mg KOH/g |
| - Wassergehalt nach DIN EN ISO 12937 | 248 mg/kg |

140 kg Rohöl wurde mit 10 Gew-% Wasser versetzt und 45 min bei 82 ºC in einem Behälter mit einem axialförderndem Schrägblattrührer mit 60 U/min für 10 min verrührt. Beim anschließenden Zentrifugieren bildete sich keine scharfe Phasengrenze zwischen der leichten und der schweren, Schleim enthaltenden, Phase aus. Eine Abtrennung des Schleims mittels Zentrifuge wäre daher nur mit großen, unwirtschaftlichen Ölverlusten möglich. Darum wurde dieser Rohölansatz verworfen und beim nächsten Ansatz die Entschleimung mit Phosphorsäure durchgeführt.

Zu 140 kg Rohöl der gleichen Sorte wurden 0,42 kg 85 %-ige Phosphorsäure hinzu gegeben und für 10 min bei 80 ºC in einem Beh älter mit einem axialfördernden Schrägblattrührer mit 60 U/min gerührt.

Die anschließende Zugabe von 4,3 kg 12-% NaOH-Lösung führte zu einem plötzlichen Temperaturanstieg im Rührbehälter um 10 ºC und zu einem beträchtlichem Viskositätsanstieg im Öl. Bei der Abkühlung auf Raumtemperatur erstarrte die Masse. Die gewählten Behandlungsbedingungen haben Verseifung und Polymerisation des Jatrophaöls unter Einbindung des Feststoffes ausgelöst, die eine weitere Raffination nicht mehr zuließen.

### Beispiel 2: Aufarbeitung von Jatropha-Rohöl nach dem erfindungsgemäßen Verfahren

118 kg Jatropha-Rohöl, mit den in Beispiel 1 genannten Eigenschaften, wurde bei 25ºC mit 307 g einer 85%-igen Phosphorsäure und einer durch Auflösen von 47,2 g kristalliner Zitronensäure in 100 g Wasser hergestellten Zitronensäurelösung 30 min in einem Behälter mit einem axialförderndem Schrägblattrührer mit 60 U/min verrührt. Anschließend wurden bei derselben Temperatur 220 g in 1.613 kg Wasser gelöstes Natriumhydroxid und 600 g in 10 kg Wasser eingerührtes Zellulosemehl vom Typ Cellufluxx F15 in das Öl eingerührt. Durch Zentrifugieren wurden 32,9 kg Schlamm aus dem Öl abgetrennt, sodass 98,3 kg entschleimtes Öl, entsprechend einer Ölausbeute von 83,3 Gew-% erhalten wurde.

### Analysenwerte des entschleimten Öls:

| | |
|---|---|
| - Säurezahl | 2,0 mg KOH/g |
| - Wassergehalt | 780 ppm |
| - Phosporgehalt | < 5 ppm |
| - Oxidationsstabilität | 19 h |

Anschließend wurden in das entschleimte Öl 1 Gew-% Zellulosemehl des gleichen Typs direkt eingerührt und das Öl mittels eines Anschwemmfilters bei einer Öltemperatur von 30ºC weiter gereinigt. Es wu rden 94,3 kg gefiltertes Öl erhalten.

Die Wasserdampfstrippung erfolgte bei 205ºC und 3 h Verweilzeit und 5 mbar.

### Analysenwerte des Öls nach der Wasserdampfstrippung:

| | |
|---|---|
| - Säurezahl | 0,13 mg KOH/g |
| - Wassergehalt | 235 ppm |
| - Phosphorgehalt | < 5 ppm |
| - Oxidationsstabilität | 20,6 h |
| - Gesamtverschmutzung | < 24 mg/kg |
| - Erdalkaligehalt (Ca + Mg) | < 5,0 mg/kg |

Mit dieser erreichten Ölqualität ist es möglich, mittels eines gängigen Umesterungsverfahrens, wie es beispielsweise in DE 10 2006 044 467 B4 dargestellt ist, Biodiesel zu erzeugen, das der Biodiesel-Norm EN 14214 entspricht.

Es wurden 92,8 kg Öl aus der Wasserdampfstrippung ausgetragen. Die Gesamtausbeute des Aufarbeitungsverfahrens betrug (92,8 kg x 100%)/118 kg = 78,6 %.

## Patentansprüche

1. Verfahren zur Aufarbeitung von leicht verseifbarem Rohöl pflanzlicher oder tierischer Herkunft, das als Rohstoff zur Herstellung von Biodiesel mittels eines Umesterungsverfahrens geeignet ist, bei dem, in einer ersten Verfahrensstufe, eine Entschleimung des Rohöls unter Zugabe von Säure, anschließend eine Teilneutralisation der zugegebenen Säure unter Zugabe von Base und eine Abtrennung der dabei entstandenen Schleimstoffe und Seifen mittels eines mechanischen Trennverfahrens durchgeführt wird, und bei dem dann, in einer weiteren Verfahrensstufe, durch Strippen mit inertem Gas oder Wasserdampf und/oder unter Anlegen eines Vakuums der Gehalt an Geruchsstoffen und freien Fettsäuren im Öl weiter reduziert wird, **dadurch gekennzeichnet, dass** die Verfahrensstufen Entschleimung, Teilneutralisation mit Base und Abtrennung der Schleimstoffe in einem ersten Temperaturbereich durchgeführt werden und dass das Strippen und/oder die Vakuumbehandlung in einem zweiten Temperaturbereich durchgeführt wird, wobei der Abstand zwischen der oberen Grenze des ersten und der unteren Grenze des zweiten Temperaturbereichs mindestens 100, aber höchstens 220 K, beträgt.

2. Verfahren nach Anspruch 1, **dadurch gekennzeichnet, dass** der erste Temperaturbereich zwischen 0 und 50ºC, bevorzugt zwischen 15 und 35ºC liegt.

3. Verfahren nach Anspruch 1, **dadurch gekennzeichnet, dass** der zweite Temperaturbereich zwischen 170 und 220ºC. bevorzugt zwischen 190 und 210ºC, besonders bevorzugt zwischen 195 und 205ºC liegt.

4. Verfahren nach einem der vorhergehenden Ansprüche, **dadurch gekennzeichnet, dass** die Base NaOH umfasst.

5. Verfahren nach einem der vorhergehenden Ansprüche, **dadurch gekennzeichnet, dass** als Säure bevorzugt Phosphorsäure und/oder Zitronensäure eingesetzt wird.

6. Verfahren nach einem der vorhergehenden Ansprüche, **dadurch gekennzeichnet, dass** als mechanisches Trennverfahren die Zentrifugation, die Filtration oder die Dekantation oder eine Kombination dieser Verfahren eingesetzt werden.

7. Verfahren nach einem der vorhergehenden Ansprüche, **dadurch gekennzeichnet, dass** das Strippen bevorzugt mit Wasserdampf als Strippungsmittel durchgeführt wird.

8. Verfahren nach einem der vorhergehenden Ansprüche, **dadurch gekennzeichnet, dass** in der Verfahrensstufe Entschleimung die Zugabe von Phosphorsäure und Wasser in der Weise erfolgt, dass 0,2 bis 0,3 Gew.-%, bezogen auf das Startgewicht des Ansatzes, an 85%-iger Phosphorsäure in das Rohöl eingerührt wird.

9. Verfahren nach Anspruch 9, **dadurch gekennzeichnet, dass** in der Verfahrensstufe Entschleimung zusätzlich zur Phosphorsäure 0,03 bis 0,05 Gew.-%, bezogen auf das Startgewicht des Ansatzes, kristalliner Zitronensäure, und/oder Tocopherole und/oder Ascorbinsäure und 0,05 bis 0,1 Gew.-% Wasser in das Rohöl eingerührt wird.

10. Verfahren nach einem der vorhergehenden Ansprüche, **dadurch gekennzeichnet, dass** vor der Entschleimung mit einer Säure eine Entschleimung mit Wasser und anschließender Abtrennung der Schleimstoffe mittels eines mechanischen Trennverfahrens durchgeführt wird.

11. Verfahren nach einem der vorhergehenden Ansprüche, **dadurch gekennzeichnet, dass** in der Verfahrensstufe Teilneutralisation die Natronlauge in Form von 12-%-iger NaOH-Lösung zugesetzt wird, und das in einer solchen Menge, dass rechnerisch höchstens 70 mol-% der in der Verfahrensstufe Entschleimung zugesetzten Phosphorsäure zu Na₃PO₄ neutralisiert wird, und dass 8 bis 10 Gew-%, bezogen auf das Startgewicht des Ansatzes, Wasser in die Mischung eingerührt wird.

12. Verfahren nach einem der vorhergehenden Ansprüche, **dadurch gekennzeichnet, dass** zur Abtrennung von Schleimstoffen und Seifen in Anschluss an die Entschleimung und die Teilneutralisation dem Rohöl Adsorptionsstoffe zugesetzt werden, um die Wirkung des mechanischen Trennverfahrens und des Filtrierungsverfahrens zu verbessern.

13. Verfahren nach einem der vorhergehenden Ansprüche, **dadurch gekennzeichnet**, das die Verfahrensstufe Strippen kontinuierlich als kontinuierliches Verfahren durchgeführt wird.

14. Verwendung des, einem der vorherigen Ansprüche gemäßen, Verfahrens, zur Aufarbeitung von Jatrophaöl.
